# DEMANDE DE BREVET EUROPEEN

(11) **EP 1 160 602 A1**
(43) Date de publication de la demande: **05.12.2001**
(21) Numéro de dépôt: 01401412.0
(22) Date de dépôt: 30.05.2001
(51) Int. Cl.: G02B 6/42

(54) **Procédé d'alignement d'un laser à pastille inversée, monté dans une position inclinée sur une embase utilisant des plots d'alignement**

(30) Priorité: 31.05.2000 FR 0007043
(71) Demandeur: ALCATEL, 75008 Paris (FR)
(72) Inventeur: Fernier, Bruno, c/o Cabinet Ballot, 94230 Cachan (FR); Keller, Dominique, c/o cabinet Ballot, 94230 Cachan (FR); Rabaron, Stéphane, c/o Cabinet Ballot, 94230 Cachan (FR); Goth, Alwin, c/o Cabinet Ballot, 94230 Cachan (FR)
(74) Mandataire: Ballot, Paul

(57) **Abrégé**

L'invention concerne un dispositif optique comportant un composant optique (1) disposé sur une embase (5) munie d'éléments d'appui (20), le composant comportant un guide d'onde (12) et une facette de sortie (15) située dans un plan perpendiculaire au plan d'assemblage du composant sur l'embase, ladite facette étant inclinée par rapport au plan perpendiculaire à l'axe (11) du guide d'onde, une onde optique issue du composant se propageant alors dans un milieu intermédiaire selon un axe optique (30) de faisceau de sortie, caractérisé en ce que le composant optique comporte des éléments d'appui (18) complémentaires de ceux (20) de l'embase et qui coopèrent avec ces derniers pour un positionnement latéral (x), et en ce que les éléments d'appui complémentaires (18, 20) sont disposés de manière à ne pas modifier la direction dudit axe optique (30) du faisceau de sortie lors d'un déplacement longitudinal (z) du composant sur l'embase.

## Description

La présente invention se rapporte à un procédé d'alignement de composants optiques disposés sur une embase, tel qu'un support en silicium par exemple et au dispositif optique associé. L'invention concerne plus spécifiquement un tel procédé et dispositif comprenant au moins un composant optique comportant un guide d'onde et une facette de sortie dont le plan est perpendiculaire au plan de l'embase et incliné par rapport au plan perpendiculaire à la direction du guide d'onde. Un tel composant est également connu sous le terme de composant à guide incliné ou « tilté » de l'anglais « tilted ».

Un des problème principaux que l'on cherche en général à résoudre en optique intégré consiste à réaliser un couplage de mode optique optimal entre les différents composants du dispositif séparés par un milieu intermédiaire (air, polymère ou autre). Or, étant donné la taille des modes utilisés pour des transmissions optiques d'information, un couplage optimal passe nécessairement par un alignement précis des axes optiques des composants avec le faisceau de l'onde optique se propageant dans le milieu intermédiaire. Dans le cas de composants non tiltés, ce faisceau de sortie de l'onde optique sera parallèle aux axes optiques des composants.

Ainsi, le couplage optique d'un laser avec une fibre optique par exemple, nécessite un alignement vertical et latéral des deux composants de manière à faire coïncider les axes optiques, et un ajustement longitudinal pour optimiser la puissance de couplage.

Plusieurs méthodes d'alignement de composants sur une embase sont connues de l'état de la technique.

Une première méthode consiste à réaliser un alignement actif ou dynamique par une mesure en temps réelle de la puissance du signal optique émis dans la fibre. Cette méthode permet d'obtenir de bons résultats sur le plan qualitatif (précision inférieure à 1µm) mais ne s'inscrit nullement dans une logique de fabrication de dispositifs intégrés bas coûts.

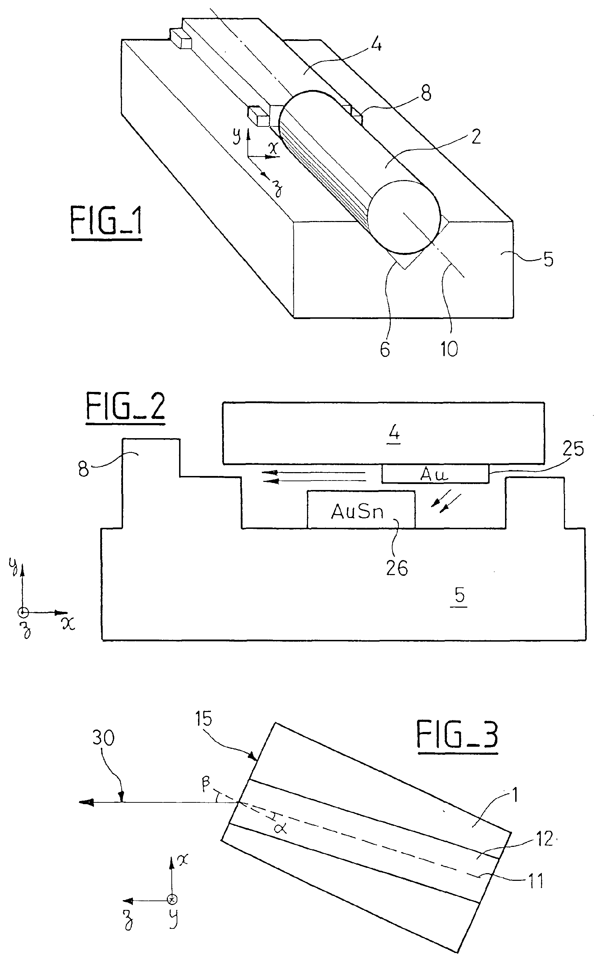

Une autre méthode, dite d'alignement passif, est illustrée sur la figure 1 qui représente une vue schématique en perspective d'une puce laser 4 et d'une fibre optique 2 alignées sur une embase 5, leurs axes optiques 10 étant confondus.

La fibre optique 2 est placée sur l'embase 5 dans une rainure 6 en forme de V qui la positionne latéralement (selon l'axe x) et verticalement (selon l'axe y). La puce laser 4 est placée sur l'embase 5 par une machine dont la précision est de l'ordre de 5µm environ. Cette précision est bien en deçà de celle obtenue par un alignement actif et n'est pas suffisante dans le cadre d'applications à la transmission optique d'information. Un meilleur positionnement latéral de la puce laser 4 sur l'embase 5 peut alors être obtenue en plaçant la puce 4 contre des butées 8 pratiquées sur l'embase 5.

La mise en butée de la puce laser 4 sur l'embase 5 peut être réalisée par une méthode de passage en fusion d'une métallisation et d'une soudure, également connue sous le terme anglais de « Reflow Process ». Une telle méthode, bien maîtrisée dans l'état de l'art, est illustrée sur la figure 2.

La puce 4 est recouverte d'une métallisation 25 Or (Au) et l'embase 5 est recouverte d'une métallisation supportant une soudure 26 Or/Etain (AuSn). Les formes et emplacements respectifs des deux métallisations 25, 26 sont précisément contrôlés. Un passage en température est alors réalisé, et la mise en fusion des deux métallisations 25, 26 engendre une force de rappel par effet de capillarité qui plaque la puce 4 sur l'embase (alignement vertical selon y) et la ramène contre les butées 8 (alignement latéral selon x).

Le positionnement longitudinal (selon z) des composants est optimisé en faisant glisser l'un ou l'autre composant selon cette direction, en déplaçant la fibre 2 dans la rainure 6 par exemple. Les pertes de couplage sur le positionnement longitudinal sont en effet infimes en comparaison des pertes optiques encourues par un mauvais positionnement latéral ou vertical des composants.

Cette méthode d'alignement passif permet un positionnement latéral précis d'un composant 4 sur une embase 5.

Le problème demeure cependant entier dans le cas de composants tiltés 1 disposés sur une embase 5 (figure 3). En effet, pour diminuer la réflectivité de la facette de sortie 15 d'un composant optique 1, un laser en matériau semi-conducteur III-V par exemple, on réalise un guide d'onde 12 dans le plan d'assemblage du composant mais dont la direction de l'axe optique 11 est inclinée d'un angle α (de 7 ° par exemple) par rapport à la perpendiculaire au plan de la facette de sortie 15. La facette de sortie 15 peut être gravée ou clivée selon un des plans cristallins du matériau semi-conducteur (de l'InP par exemple), ces deux techniques étant bien maîtrisées dans l'art antérieur.

Selon une particularité de ces composants tiltés, l'onde optique provenant du guide d'onde 12 et se propageant à l'extérieur du composant 1 dans un milieu intermédiaire définit un axe optique 30 de faisceau de sortie qui n'est pas perpendiculaire à la facette de sortie 15 du composant 1. Cette particularité découle directement de l'application de la loi de Descarte.

L'alignement d'un tel composant tilté avec un autre composant, tilté ou non, sur une embase devient par conséquent très délicat car le moindre déplacement longitudinal peut compromettre l'alignement latéral et entraîner d'importantes pertes de couplage.

Des machines permettent de réaliser un tel alignement avec la précision souhaitée de l'ordre du micromètre. Cependant, ces machines sont chères et longues à régler, ce qui ne s'inscrit pas dans une logique de fabrication de masse de dispositifs optiques comprenant des composants tiltés.

La présente invention a pour objectif de permettre un alignement de composants, dont au moins un est un composant tilté, sur une embase.

La présente invention exploite la technique du « Reflow Process » et l'applique à un dispositif optique comprenant un composant tilté.

A cet effet, l'invention propose de réaliser des appuis mécaniques complémentaires sur l'embase et sur le composant tilté, ces appuis étant disposés de manière à ne pas modifier la direction de l'axe optique du faisceau de sortie lors d'un éventuel déplacement longitudinal du composant sur l'embase.

L'orientation des appuis mécaniques complémentaires est telle que l'axe commun de ces appuis est parallèle à l'axe du faisceau de l'onde optique se propageant dans le milieu intermédiaire.

La présente invention se rapporte plus particulièrement à un procédé d'alignement sur une embase d'un composant optique comportant un guide d'onde situé dans un plan parallèle au plan d'assemblage du composant sur l'embase et une facette de sortie située dans un plan perpendiculaire au plan d'assemblage du composant, ladite facette étant inclinée par rapport au plan perpendiculaire à l'axe du guide d'onde, une onde optique issue du composant se propageant alors selon un axe optique de faisceau de sortie, caractérisé en ce qu'il comporte les étapes suivantes :
- réalisation d'éléments d'appui sur l'embase ;
- réalisation d'éléments d'appui sur le composant optique, ces éléments étant complémentaires de ceux réalisés sur l'embase, lesdits éléments d'appuis du composant et de l'embase étant disposés de manière à ne pas modifier la direction dudit axe optique lors d'un déplacement longitudinal du composant sur l'embase ;
- alignement latéral du composant sur l'embase par mise en butée des éléments d'appui complémentaires.

Selon une caractéristique, l'embase est sur un substrat en silicium.

Selon une autre caractéristique, le composant optique est un composant semi-conducteur en matériau III-V.

Selon un mode de réalisation, les éléments d'appui de l'embase et du composant sont réalisés par gravure sèche.

Selon un autre mode de réalisation, les éléments d'appui du composant sont réalisés par gravure chimique.

Selon une caractéristique, la mise en butée des éléments d'appui complémentaires est réalisée au moyen de métallisation Or et de soudure Or/Etain déposées respectivement sur le composant et sur l'embase, ou inversement, de manière à permettre l'exercice d'une force de rappel latérale entre le composant et l'embase par un passage en température.

La présente invention concerne également un dispositif optique comportant au moins un composant optique disposé sur une embase, des éléments d'appui étant prévus sur ladite embase, le composant comportant un guide d'onde situé dans un plan parallèle au plan d'assemblage du composant sur l'embase et une facette de sortie située dans un plan perpendiculaire au plan d'assemblage du composant sur l'embase, ladite facette étant inclinée par rapport au plan perpendiculaire à l'axe du guide d'onde, une onde optique issue du composant se propageant alors dans un milieu intermédiaire selon un axe optique de faisceau de sortie, caractérisé en ce que le composant optique comporte des éléments d'appui complémentaires de ceux de l'embase et qui coopèrent avec ces derniers pour un positionnement latéral du composant sur l'embase, et en ce que les éléments d'appui complémentaires du composant et de l'embase sont disposés de manière à ne pas modifier la direction dudit axe optique du faisceau de sortie lors d'un déplacement longitudinal du composant sur l'embase.

Selon une variante, le milieu intermédiaire est de l'air.

Selon une autre variante, le milieu intermédiaire est un polymère.

Selon une application, le composant est aligné sur l'embase avec une fibre optique.

Selon une autre application, le composant est aligné sur l'embase avec un ou plusieurs guides de silice, le composant ayant une longueur contrôlée pour un alignement avec une pluralité de guides de silice.

Selon une application, le composant optique est un émetteur d'un signal optique.

Selon une autre application, le composant optique est un émetteur-récepteur d'un signal optique.

Les particularités et avantages de l'invention apparaîtront à la lecture de la description qui suit, donnée à titre d'exemple illustratif et non limitatif, et faite en référence aux figures annexées qui représentent :
- la figure 1, déjà décrite, illustre schématiquement une technique classique d'alignement d'une puce laser avec une fibre optique sur une embase silicium ;
- la figure 2, déjà décrite, illustre schématiquement la technique de l'alignement latéral par fusion ;
- la figure 3, déjà décrite, illustre schématiquement un composant tilté ;
- la figure 4 est une vue schématique de dessus du dispositif optique selon une première application de l'invention ;
- la figure 5 est une vue schématique de dessus du dispositif optique selon une deuxième application de l'invention ;
- la figure 6 est une vue schématique en coupe du dispositif optique selon l'invention.

La présente invention propose de réaliser un dispositif optique comportant au moins un composant tilté, tel qu'une puce laser sur InP par exemple, ledit composant étant disposé sur une embase silicium et aligné de manière à permettre un couplage optique optimal avec un autre composant, tel qu'une fibre optique ou des guides de silice par exemple.

L'utilisation d'un composant tilté permet avantageusement de minimiser la réflectivité de sa facette de sortie d'environ 0,3% pour une facette clivée droite dans de l'InP à une valeur inférieure à 0,1% pour une facette clivée et tiltée. Un tel composant comporte un guide d'onde 12 incliné, situé dans un plan parallèle au plan d'-assemblage du composant 1 sur l'embase 5, et une facette de sortie 15, située dans un plan perpendiculaire au plan d'assemblage du composant 1 sur l'embase 5, et inclinée par rapport au plan perpendiculaire à l'axe 11 du guide d'onde 12. L'onde optique issue du composant 1 se propage alors selon un axe optique 30 de faisceau de sortie qui n'est pas perpendiculaire au plan de la facette de sortie 15.

Le but de l'invention est de réaliser un couplage optique qui ne soit pas compromis par un déplacement longitudinal des composants l'un par rapport à l'autre sur l'embase.

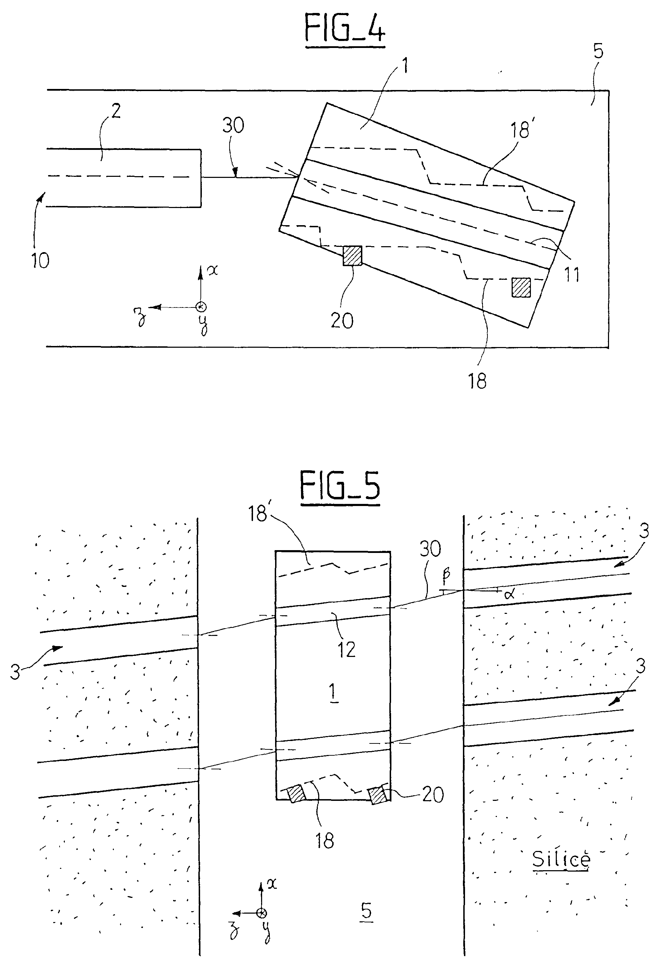

La figure 4 illustre une première application de l'invention dans laquelle un composant optique tilté 1 est aligné avec une fibre optique 2 sur une embase 5. La fibre optique 2 est avantageusement positionnée sur l'embase 5 dans une rainure en forme de V tel que cela est bien connu de l'art antérieur. Le composant tilté 1 est placé sur l'embase 5 au moyen d'une machine classiquement utilisée qui le positionne à ±5µm.

L'objectif de l'invention est de positionner le composant tilté 1 précisément sur l'embase 5 (on cherche une précision meilleure que le micromètre) de manière à aligner l'axe optique 30 du faisceau de sortie avec l'axe optique 10 de la fibre 2. Cet alignement permet d'une part un couplage des modes optiques optimal, et d'autre part un ajustement de la distance séparant les composants 1 et 2. L'ajustement longitudinal (selon z) peut être obtenu, par exemple, par un déplacement de la fibre optique 2 dans sa rainure comme cela est connu de l'art antérieur.

Le positionnement du composant tilté 1 sur l'embase 5 est obtenu au moyen d'éléments d'appui mécaniques 18 et 20 réalisés respectivement sur le composant 1 et sur l'embase 5, ces éléments 18 et 20 étant complémentaires et disposés parallèles à l'axe optique 30 du faisceau de sortie de manière à ne pas modifier la direction dudit axe 30 lors d'un éventuel déplacement longitudinal, selon z, du composant 1 sur l'embase 5.

Les éléments d'appui 20 de l'embase 5 peuvent être des butées réalisées par gravure sèche par exemple tel que cela est souvent pratiqué pour positionner des composants 4 non tiltés dans l'art antérieur.

Les éléments d'appui 18 du composant 1 peuvent être des indentations réalisées par gravure sèche ou par gravure chimique selon un plan cristallin défini du composant 1. Dans le cas d'une gravure chimique, on obtiendra des indentations 18 et 18' de part et d'autre du composant 1 même si une seule série d'indentations 18 est nécessaire à l'alignement latéral du composant sur l'embase.

La mise en butée de ces éléments d'appui complémentaires 18 et 20 peut avantageusement être réalisée au moyen d'une métallisation Or (Au) 25 et d'une soudure Or/Etain (AuSn) 26 déposées respectivement sur le composant 1 et sur l'embase 5 (ou inversement) de manière à permettre l'exercice d'une force de rappel latérale et verticale par un passage en température selon la technique connue du « Reflow Process ».

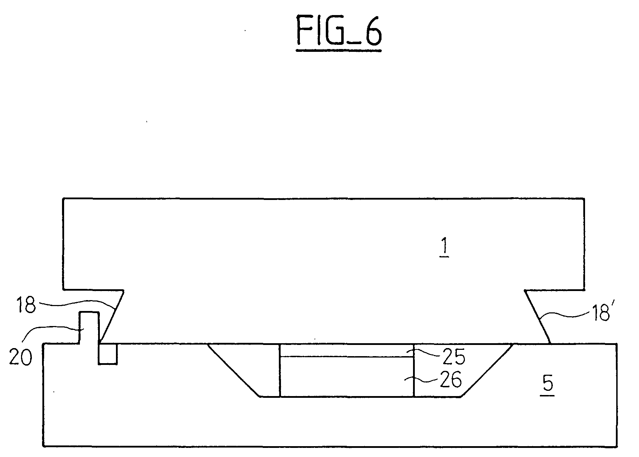

La figure 5 illustre une deuxième application de l'invention dans laquelle un composant optique tilté 1 est aligné avec des guides de silice 3 sur une embase 5. Les guides de silice 3 sont enterrés et peuvent avantageusement présenter des facettes droites ou tiltées. Le composant tilté 1 est placé sur l'embase 5 au moyen d'une machine classiquement utilisée qui le positionne à ±5µm.

Dans cette application, le composant 1 doit d'une part être positionné sur l'embase 5 avec une précision de l'ordre du micromètre, et d'autre part être éventuellement déplacé dans la direction longitudinal (selon z) pour un ajustement de la puissance de couplage sans pour autant compromettre l'alignement latéral (selon x) des composants 1 et 3. Les guides de silices 3 sont en effet figés dans leur position sur l'embase 5.

A cet effet, des éléments d'appui complémentaires 18 et 20 sont réalisés respectivement sur le composant 1 et sur l'embase 5 tel que cela a été décrit en référence à la première application. L'orientation de ces éléments d'appui 18 et 20 est telle que la direction de l'axe optique 30 du faisceau de propagation de l'onde optique dans le milieu intermédiaire (air, polymère ou autre) n'est pas modifiée par un éventuel déplacement longitudinal du composant 1 sur l'embase 5. Cette direction 30 de propagation de l'onde optique dans le milieu intermédiaire est déterminée par des techniques mathématiques parfaitement maîtrisées qui découlent directement de l'application de la loi de Descarte.

Il est ainsi possible de faire glisser légèrement le composant 1 longitudinalement sur l'embase 5 pour un ajustement du couplage sans en compromettre la qualité par un décalage latéral.

Selon l'invention, le composant tilté peut fonctionné comme un émetteur d'un signal optique, ou comme un récepteur-émetteur d'un signal optique.

## Revendications

1. Procédé d'alignement sur une embase (5) d'un composant optique (1) comportant un guide d'onde (12) situé dans un plan parallèle au plan d'assemblage du composant (1) sur l'embase (5) et une facette de sortie (15) située dans un plan perpendiculaire au plan d'assemblage du composant (1) sur l'embase (5), ladite facette (15) étant inclinée par rapport au plan perpendiculaire à l'axe (11) du guide d'onde (12), une onde optique issue du composant (1) se propageant alors selon un axe optique (30) de faisceau de sortie, **caractérisé en ce qu'**il comporte les étapes suivantes :
- réalisation d'éléments d'appui (20) sur l'embase (5) ;
- réalisation d'éléments d'appui (18) sur le composant optique (1), ces éléments (18) étant complémentaires de ceux (20) réalisés sur l'embase (5), lesdits éléments d'appuis (18, 20) du composant (1) et de l'embase (5) étant disposés de manière à ne pas modifier la direction dudit axe optique (30) lors d'un déplacement longitudinal du composant (1) sur l'embase (5) ;
- alignement latéral du composant (1) sur l'embase (5) par mise en butée des éléments d'appui complémentaires (18,20).

2. Procédé selon la revendication 1, **caractérisé en ce que** l'embase (5) est sur un substrat en silicium.

3. Procédé selon la revendication 1 à 2, **caractérisé en ce que** le composant optique (1) est un composant semi-conducteur en matériau III-V.

4. Procédé selon l'une quelconque des revendications précédentes, **caractérisé en ce que** les éléments d'appui (18,20) de l'embase (5) et du composant (1) sont réalisés par gravure sèche.

5. Procédé selon l'une des revendications 1 à 3, **caractérisé en ce que** les éléments d'appui (18) du composant (1) sont réalisés par gravure chimique.

6. Procédé selon l'une quelconque des revendications précédentes, **caractérisé en ce que** la mise en butée des éléments d'appui complémentaires (18, 20) est réalisée au moyen de métallisation Or (25) et de soudure Or/Etain (26) déposées respectivement sur le composant (1) et sur l'embase (5), ou inversement, de manière à permettre l'exercice d'une force de rappel latérale entre le composant (1) et l'embase (5) par un passage en température.

7. Dispositif optique comportant au moins un composant optique (1) disposé sur une embase (5), des éléments d'appui (20) étant prévus sur ladite embase (5), le composant comportant un guide d'onde (12) situé dans un plan parallèle au plan d'assemblage du composant (1) sur l'embase (5) et une facette de sortie (15) située dans un plan perpendiculaire au plan d'assemblage du composant (1) sur l'embase (5), ladite facette (15) étant inclinée par rapport au plan perpendiculaire à l'axe (11) du guide d'onde (12), une onde optique issue du composant (1) se propageant alors dans un milieu intermédiaire selon un axe optique (30) de faisceau de sortie, **caractérisé en ce que** le composant optique (1) comporte des éléments d'appui (18) complémentaires de ceux (20) de l'embase (5) et qui coopèrent avec ces derniers pour un positionnement latéral (x) du composant (1) sur l'embase (5), et **en ce que** les éléments d'appui complémentaires (18, 20) du composant (1) et de l'embase (5) sont disposés de manière à ne pas modifier la direction dudit axe optique (30) du faisceau de sortie lors d'un déplacement longitudinal (z) du composant (1) sur l'embase (5).

8. Dispositif optique selon la revendication 7, **caractérisé en ce que** le milieu intermédiaire est de l'air.

9. Dispositif optique selon la revendication 7, **caractérisé en ce que** le milieu intermédiaire est un polymère.

10. Dispositif optique selon l'une quelconque des revendications 7 à 9, **caractérisé en ce que** le composant (1) est aligné sur l'embase (5) avec une fibre optique (2).

11. Dispositif optique selon l'une quelconque des revendications 7 à 9, **caractérisé en ce que** le composant (1) est aligné sur l'embase (5) avec un ou plusieurs guides de silice (3), le composant (1) ayant une longueur contrôlée pour un alignement avec une pluralité de guides de silice (3).

12. Dispositif optique selon l'une quelconque des revendications 7 à 11, **caractérisé en ce que** le composant optique (1) est un émetteur d'un signal optique.

13. Dispositif optique selon l'une quelconque des revendications 7 à 11, **caractérisé en ce que** le composant optique (1) est un émetteur-récepteur d'un signal optique.
